(19) Europäisches Patentamt

European Patent Office

Office européen des brevets

(11) **EP 2 684 629 B1**

(12) **FASCICULE DE BREVET EUROPEEN**

(45) Date de publication et mention
de la délivrance du brevet:
**31.12.2014 Bulletin 2015/01**

(51) Int Cl.:
**B23B 49/02** *(2006.01)* **E04B 1/76** *(2006.01)*
**E04D 15/04** *(2006.01)*

(21) Numéro de dépôt: **13305938.6**

(22) Date de dépôt: **02.07.2013**

(54) **Gabarit de perçage**

Bohrschablone

Drill template

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.07.2012 FR 1256566**

(43) Date de publication de la demande:
**15.01.2014 Bulletin 2014/03**

(73) Titulaire: **Ateliers LR Etanco
78230 Le Pecq (FR)**

(72) Inventeurs:
• **Baguari, Abdelkrim
78200 MANTES LA JOLIE (FR)**
• **Leroy, Alain
78820 JUZIERS (FR)**

(74) Mandataire: **Mazabraud, Xavier
Cabinet Moutard
35, rue de la Paroisse
78000 Versailles (FR)**

(56) Documents cités:
**EP-A1- 1 637 291 EP-B1- 0 843 788
DE-A1- 10 060 484**

EP 2 684 629 B1

**Description**

L'invention se situe dans le domaine des outils de perçage, plus particulièrement dans le domaine des outils visant à faciliter la pose et le vissage d'une pièce de fixation dans un support surmonté d'une couche de matériau souple qui s'interpose entre l'opérateur et le support.

De nombreux moyens ont été développés pour fixer une couche de matériau isolant et une membrane d'étanchéité sur un toit en bardage d'acier, voir par exemple FR 2 955 631. Les vis utilisées dans ces applications sont des vis auto foreuses et auto taraudeuses, qui sont donc aptes à forer et à tarauder dans une épaisseur relativement mince d'acier. En conséquence, la pose des pièces de fixation et le vissage peuvent s'effectuer en une seule opération. DE 100 60 484 A1 divulgue un gabarit de perçage comprenant les caractéristiques du préambule de la revendication indépendante 1.

Dans certains cas, on souhaite poser un matériau isolant et une membrane d'étanchéité sur un toit en béton. Dès lors la fixation ne peut plus être réalisée en une seule opération, il faut commencer par forer un trou dans le béton, au travers du matériau isolant, puis poser une pièce de fixation dans le matériau isolant, à introduire une vis à béton et visser. Un problème survient du fait que le matériau isolant a une épaisseur importante, pouvant atteindre 200 mm, et qu'après avoir inséré la pièce de fixation dans le matériau isolant puis la vis à béton dans le fût de cette pièce de fixation, l'opérateur retrouve parfois difficilement le trou foré dans le béton avec la pointe de la vis, celui-ci lui étant caché, ceci d'autant plus qu'il ne peut manoeuvrer la vis, enfouie dans le fût de la pièce de fixation. L'invention vise à résoudre ce problème. A cet effet, elle propose un gabarit de perçage, prévu pour faciliter simultanément le perçage d'un support et la pose d'un moyen de fixation sur un matériau isolant surmontant le support, le gabarit comprenant :

- des moyens de guidage,
- à une première extrémité desdits moyens de guidage, un moyen de solidarisation dudit moyen de fixation sur le gabarit,
- une bride prévue pour recevoir le nez d'un outil de perçage et pour coulisser le long des moyens de guidage.

Le gabarit selon l'invention permet de réaliser simultanément le perçage dans un support et la pose d'un moyen de fixation dans une couche de matériau isolant qui surmonte ce support, le vissage intervenant dans une deuxième étape. Ce vissage est facilité du fait que le moyen de fixation a été posé de façon parfaitement alignée avec le trou dans le support. Le support visé est un béton, mais il pourrait s'agir de tout support dans lequel un trou doit être obligatoirement être foré avant de pouvoir y visser une vis. Le moyen de fixation est avantageusement une pièce de fixation en matériau thermoplastique, du type comportant un fût et une tête à l'une de ses extrémités, le fût comportant un canal à l'intérieur duquel une vis peut prendre place.

Le gabarit se fixe sur un outil de perçage muni d'un foret, et il est prévu pour y fixer provisoirement une pièce de fixation sur un moyen de solidarisation se trouvant à une première extrémité du gabarit. Le moyen de fixation est ainsi solidarisé axialement et en rotation par rapport au gabarit.

Lors de la pose, la pièce de fixation est insérée dans le matériau isolant au fur et à mesure que le foret perce. Cette opération peut intervenir à deux étapes de la pose de l'isolation sur le support :

- pour la fixation des plaques de matériau isolant sur le support,
- pour la pose d'une membrane d'étanchéité au-dessus du matériau isolant.

Avantageusement, les moyens de guidage peuvent comporter deux tiges sensiblement parallèles.

Le gabarit comporte une bride sur laquelle se fixe le nez de l'outil de perçage, cette bride étant montée coulissante le long des tiges parallèles du gabarit de façon à ajuster sa position et donc sa profondeur de perçage.

Au voisinage de la première extrémité du gabarit, les tiges sont prolongées par des segments obliques qui se rejoignent de façon à donner la forme générale d'un V à cette première extrémité.

Avantageusement, le moyen de solidarisation du moyen de fixation peut comporter un canon muni d'un moyen de friction radial élastique.

Le moyen de fixation est provisoirement solidarisé au gabarit par l'intermédiaire d'un canon, sur lequel il est enfilé, et d'un moyen de friction radial élastique maintenu dans une gorge du canon.

Avantageusement, la surface intérieure du canon peut comporter deux rainures, prévues pour permettre le passage des plaquettes d'extrémité d'un foret à béton.

Le canon est conçu pour remplir deux fonctions :

- il permet de retenir provisoirement une pièce de fixation au gabarit par frottement, une fois inséré dans le canal du fût de la pièce de fixation,
- il maintient le foret en flexion au moment du perçage et limite ainsi les risque de flambage, car les forets utilisés peuvent être très longs, leur longueur pouvant atteindre 350 mm.

Cependant, un foret à béton comporte à son extrémité une ou deux plaquettes en matériau très dur, dont la largeur (qui détermine le diamètre du trou foré) est légèrement supérieure au diamètre de la tige. Pour que la tige soit bien guidée dans le canon, il convient donc de prévoir dans le canal du canon deux rainures permettant le passage de la/des plaquette(s). Ces rainures sont avantageusement longitudinales.

Avantageusement, le moyen de solidarisation du moyen de fixation peut comporter en outre un moyen d'anti rotation.

Le moyen d'anti rotation évite que le moyen de fixation soit entraîné en rotation par le foret. Il permet également à l'opérateur de donner une orientation à la tête du moyen de fixation en orientant le gabarit. Lorsque la tête des moyens de fixation est oblongue, il peut être souhaitable par exemple d'orienter toutes les têtes dans la même direction lors de la pose.

L'invention porte également sur un système de perçage comportant :

- un gabarit de perçage selon l'invention,
- au moins un moyen de fixation du type comportant un fût, une tête à l'extrémité du fût, le fût comportant un canal axial,

dans lequel le diamètre du canal est sensiblement égal au diamètre extérieur du canon, et une dimension de la tête transversale à l'axe du fût est sensiblement égale à l'écartement des bords tombés du moyen d'anti rotation.

Le système de perçage peut comporter un gabarit et une pièce de fixation d'un type connu, comportant un fût et une tête. La tête peut être de forme quelconque, par exemple circulaire, dans ce cas sa dimension transversale est son diamètre, ou oblongue, comportant dans ce cas une dimension longitudinale et une dimension transversale, cette dimension transversale étant sensiblement égale à l'écartement des bords tombés.

Le canon et la pièce de fixation coopèrent en ce que le diamètre extérieur du canon est sensiblement égale au diamètre intérieur du fût, de sorte que le canon peut pénétrer dans le fût de la pièce de fixation.

Le canon comporte une partie radialement saillante élastique, de diamètre légèrement supérieur au diamètre extérieur du canon, de sorte que la pièce de fixation peut y rester « accrochée » par simple frottement sur cette partie saillante.

Avantageusement, le système de perçage peut comporter en outre un outil de perçage et un foret, le diamètre de la tige du foret étant sensiblement égal au diamètre intérieur dudit canon.

Le canon et le foret coopèrent en ce que le diamètre intérieur du canon est égal voire légèrement supérieur au diamètre de la tige du foret. De cette façon le foret est libre en rotation à l'intérieur du canon et il est guidé par le canon.

L'invention porte également sur un procédé de perçage d'un support et de pose simultanée d'un moyen de fixation dans une couche de matériau isolant surmontant ledit support, utilisant un système de perçage selon l'invention, comportant les étapes suivantes :

- Fixer l'outil de perçage dans le collier de serrage de la bride à l'aide d'un second moyen de serrage,
- Fixer le foret à l'outil de perçage,
- Insérer les tiges du gabarit dans les ouvertures de la bride, et insérer le foret dans le canon,
- Insérer le moyen de fixation sur le canon et sur le moyen d'anti rotation,
- Ajuster la position de la bride sur le gabarit et actionner l'au moins un premier moyen de serrage,
- Percer,
- Retirer le gabarit et l'outil de perçage, le moyen de fixation restant en place dans le matériau isolant,
- Introduire une vis dans le fût du moyen de fixation,
- Visser.

Le moyen de fixation reste en place grâce au rétreint du matériau isolant et à l'adhérence du moyen de fixation dans le matériau isolant.

Avantageusement, la position de la bride sur le gabarit est ajustée de façon que la distance entre le moyen d'anti rotation et la pointe du foret soit sensiblement égale à :

$$Pf = E + P + M,$$

dans lequel :

E est l'épaisseur du matériau isolant,
P est la profondeur d'ancrage de la vis,
M est une marge.

La marge est la longueur de trou foré qui ne servira pas à accueillir la vis, mais prévue pour recueillir les débris de perçage. Elle est généralement comprise entre 10 et 50 mm.

Le système et le procédé selon l'invention sont particulièrement avantageux dans le cas où le foret est un foret à béton et la vis est une vis à béton.

Des modes de réalisation et des variantes seront décrits ci-après, à titre d'exemples non limitatifs, avec référence aux dessins annexés dans lesquels :

La figure 1 représente en perspective un gabarit de perçage,

La figure 2 représente en élévation un gabarit et un outil de perçage monté sur le gabarit,

La figure 3 représente une section transversale du canon et d'un foret,

La figure 4 représente en perspective la première extrémité du gabarit et le montage d'une pièce de fixation sur un gabarit,

La figure 5 représente une bride de gabarit,

La figure 6 est un croquis qui illustre le calcul de la longueur de foret qui doit s'étendre au-delà de la pointe du gabarit.

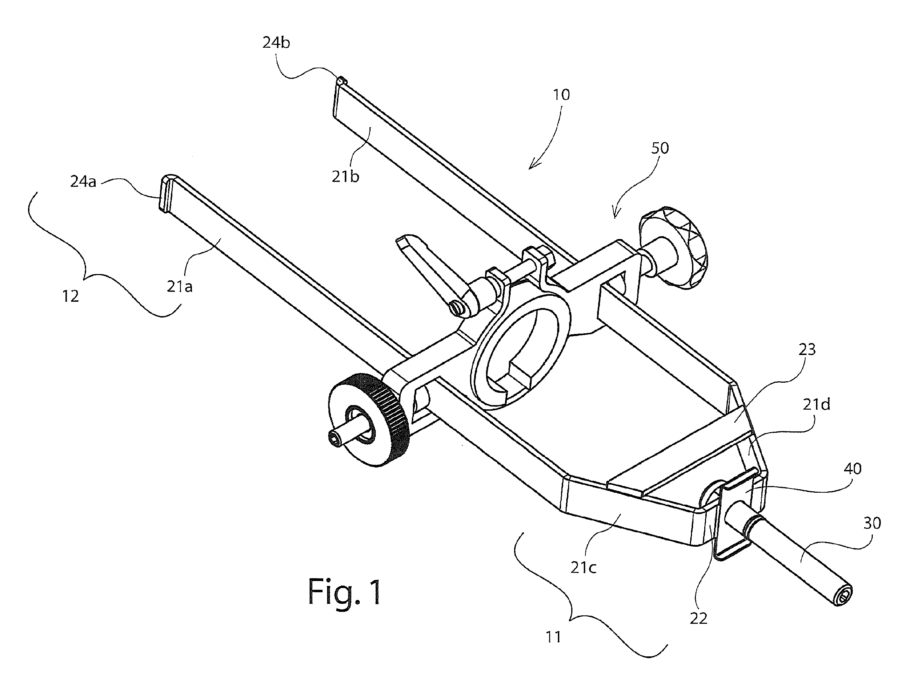

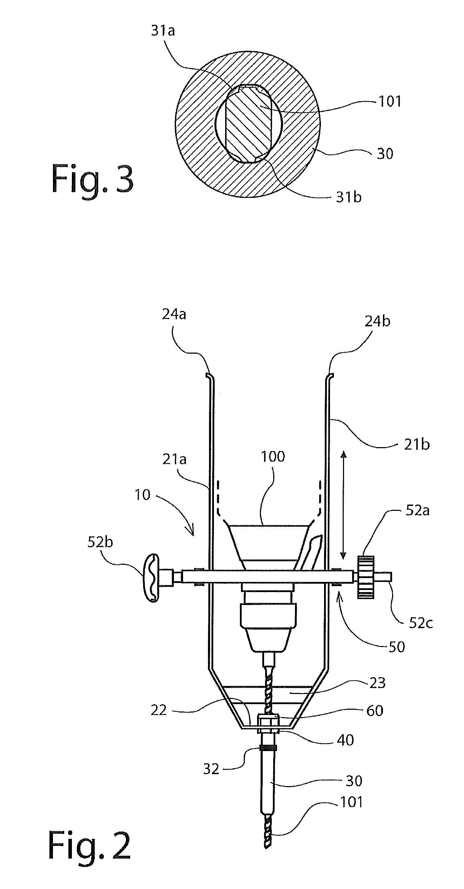

Le gabarit de perçage 10 illustré en figures 1 et 2 comporte deux tiges plates 21a, 21b sensiblement parallèles, de section constante, prolongées à une première extrémité 11 du gabarit par un segment oblique 21 c, 21 d, dont les extrémités vont en se rapprochant, de sorte que cette partie du gabarit prend la forme générale d'un V.

Les segments obliques 21c, 21d sont réunis à leur extrémité par un court segment transversal 22, orthogonal à la direction générale des tiges 21a, 21b. Au voisinage de leur milieu, ils sont réunis par un traversier 23 destiné à rigidifier l'ensemble.

Les tiges 21a, 21b, les segments obliques 21c, 21d et le segment transversal 22 sont avantageusement d'une seule pièce, ils résultent de la même tige ayant subi quatre pliages.

Sur les tiges 21a, 21b coulisse une bride 50 qui sera décrite en détail plus loin.

Au segment transversal 22 est fixé un moyen de solidarisation comportant :

- un canon 30 qui s'étend en direction opposée aux tiges 21a, 21b,
- un moyen d'anti rotation comportant une plaque 40 comprenant des moyens de maintien de la tête de la pièce de fixation.

Dans le mode de réalisation illustré, la plaque 40 est sensiblement rectangulaire, le grand côté de la plaque 40 étant orthogonal au plan défini par les tiges 21a, 21b, mais il pourrait lui être parallèle. Sur chacun de ses petits côtés, la plaque 40 comporte un moyen de maintien sous la forme d'un bord tombé 41a, 41b, l'écartement de ces bords tombés étant sensiblement égal à une dimension transversale de la tête 201 de la pièce de fixation 200. Lorsqu'elle prend place entre ces bords tombés, celle-ci est donc maintenue en rotation autour du canon 30. Les moyens de maintien pourraient être différents et comporter par exemple des griffes.

La plaque 40 comporte une ouverture en son centre, cette ouverture et le canon 30 étant coaxiaux.

Le diamètre extérieur du canon 30 est égal ou très légèrement inférieur au diamètre du fût d'une pièce de fixation 200, de sorte que cette pièce de fixation peut coulisser sur le canon. Le canon 30 comporte en outre à sa base, c'est-à-dire à proximité de la plaque 40, une gorge radiale 32 dans laquelle prend place un moyen de friction radial élastique (non représenté), tel qu'un anneau élastique ou circlips, ou un joint torique, dont le diamètre extérieur est légèrement supérieur à celui du canon 30 et au diamètre intérieur du fût. De cette façon, une fois insérée sur le canon, la pièce de fixation est retenue par frottement sur ce moyen de friction radial.

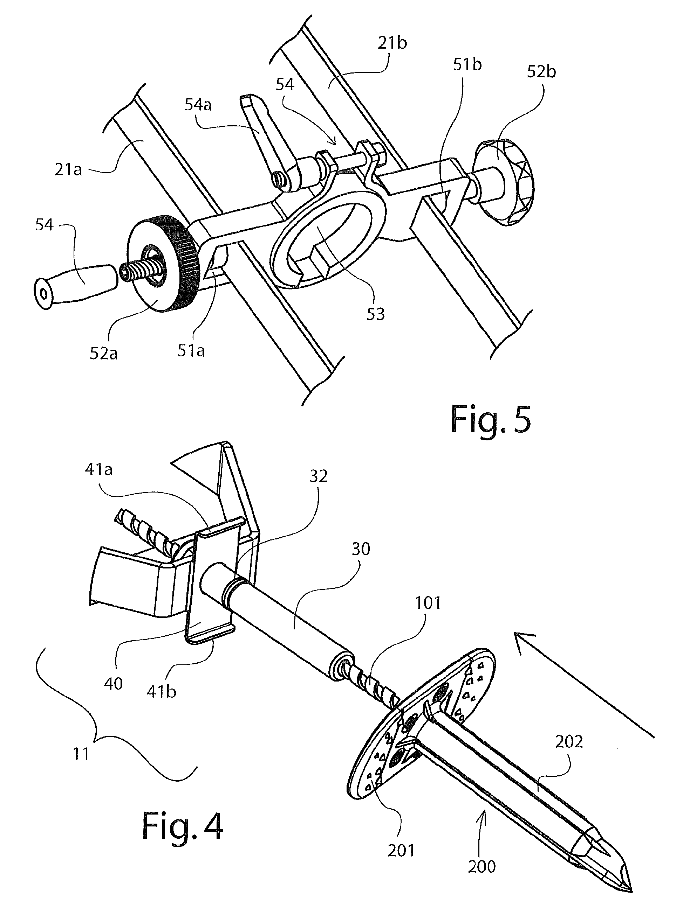

Le gabarit de perçage peut alors être manipulé avec une pièce de fixation provisoirement fixée sur le canon. La figure 4 illustre le montage d'une pièce de fixation 200 sur le canon 30 d'un gabarit de perçage.

Dans une variante d'exécution, les bords tombés 41a, 41b pourraient également consister en des moyens de clipsage de la tête 201 de la pièce de fixation, maintenant la tête sans qu'il y ait besoin d'un moyen de friction radial.

Dans encore une autre variante, le diamètre extérieur du canon 30 pourrait être légèrement supérieur au diamètre du canal du fût de la pièce de fixation 200, de sorte que la pièce de fixation s'y maintiendrait par frottement sans qu'il y ait besoin d'un moyen de friction radial.

Le diamètre intérieur du canon 30 est égal ou très légèrement supérieur au diamètre de la tige d'un foret 101, de sorte que le foret 101 est libre en rotation à l'intérieur du canon 30. Cependant les forets à béton comportent à leur extrémité une ou deux plaquettes dont la largeur est supérieure au diamètre de la tige. Comme illustré en figure 3, le canon 30 comporte deux rainures 31a, 31b sur sa surface intérieure qui constituent un passage pour les plaquettes d'un foret à béton 101.

Le canon 30 et la plaque 40 sont maintenus par vissage d'un écrou 60 sur le segment transversal 22, ce qui permet de changer le canon 30 et/ou la plaque 40 pour les adapter aux dimensions de la pièce de fixation 200 ou en raison de leur usure. Dans un autre mode de réalisation, le canon 30 et/ou la plaque 40 peuvent être simplement soudés sur le segment transversal 22.

La bride 50 illustré en figure 5 comprend un corps allongé comportant trois ouvertures :

- une première ouverture 51a, 51b à chaque extrémité, chaque première ouverture étant de forme sensiblement complémentaire à celle des tiges 21a, 21b du gabarit 10, de sorte que la bride peut coulisser sur les tiges 21a, 21b lorsqu'elles prennent place dans les premières ouvertures ; à chaque première ouverture est associé un premier moyen de serrage comportant une poignée de serrage 52a, 52b, une tige filetée et un patin destiné à s'appliquer sur une tige respective, de façon à permettre la fixation de la bride 50 à distance ajustable de la première extrémité 11 du gabarit en actionnant les poignées de serrage 52a, 52b ; une portion de tige filetée 52c peut saillir de l'une des poignées de serrage, par exemple 52a, de façon à y visser une poignée d'aide au perçage 54, de façon à permettre à l'utilisateur d'exercer une poussée ;
- une seconde ouverture 53 en son milieu, formant collier de serrage prévu pour recevoir le nez d'un outil de perçage 100 et un second moyen de serrage 54 comportant une clavette de serrage 54a ; à ce collier peut être associée une ou plusieurs bague(s) amovible(s) (non représentée) permettant d'adapter le diamètre intérieur du collier à tout moyen de perçage.

Comme il est visible sur la figure 1, à la seconde extrémité 12 du gabarit, l'extrémité 24a, 24b des tiges 21a, 21b est recourbée de façon à ne pas risquer de blesser l'opérateur et à éviter une désolidarisation intempestive de la bride 50

La figure 2 illustre le montage d'un outil de perçage 100, dont seul le nez a été représenté et dans lequel est fixé un foret 101, sur le gabarit de perçage 10. La position de la bride 50 et donc de l'outil de perçage 100 sur les tiges 21a, 21b est ajustée grâce aux poignées de serrage 52a, 52b.

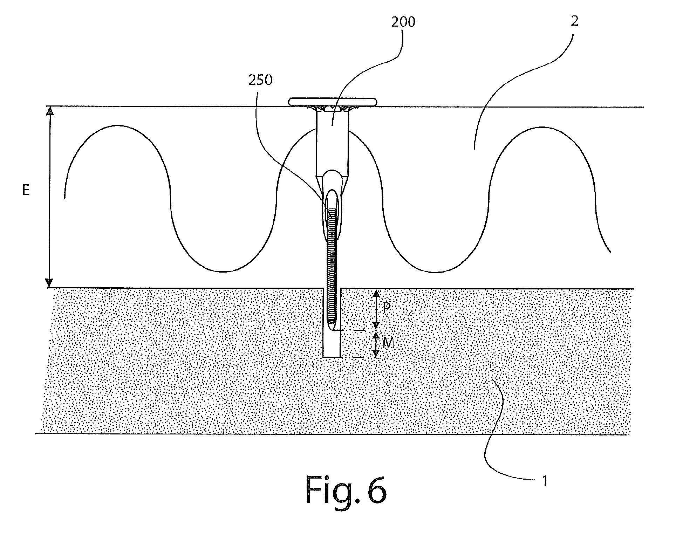

La figure 6 illustre le calcul de la position de l'outil de forage 100 et du foret 101 sur les tiges 21a, 21b. La longueur totale de perçage, y compris dans le matériau isolant 2, doit comprendre :

- l'épaisseur E du matériau isolant 2,
- la longueur de prise P de la vis à béton 250 dans le support en béton 1,
- une profondeur de marge M en fond de trou ; cette marge est comprise entre 10 et 50 mm, elle est habituellement de 30 mm.

## Revendications

1. Gabarit de perçage (10), prévu pour faciliter simultanément le perçage d'un support (1) et la pose d'un moyen de fixation (200) sur un matériau isolant (2) surmontant ledit support, ledit gabarit comprenant :

   - des moyens de guidage (21a, 21b),
   - à une première extrémité desdits moyens de guidage, un moyen de solidarisation dudit moyen de fixation sur le gabarit,

   **caractérisé par** :

   - une bride (50) prévue pour recevoir le nez d'un outil de perçage (100) et pour coulisser le long des moyens de guidage.

2. Gabarit de perçage selon la revendication 1, **caractérisé en ce que** lesdits moyens de guidage comportent deux tiges (21a, 21b) sensiblement parallèles.

3. Gabarit de perçage selon l'une des revendications 1 ou 2, **caractérisé en ce que** ledit moyen de solidarisation dudit moyen de fixation comporte un canon (30) muni d'un moyen de friction radial élastique.

4. Gabarit de perçage selon la revendication 3, **caractérisé en ce que** la surface intérieure dudit canon (30) comporte deux rainures (31a, 31b), prévues pour permettre le passage des plaquettes d'extrémité d'un foret à béton (101).

5. Gabarit de perçage selon l'une des revendications 1 à 4, **caractérisé en ce que** ledit moyen de solidarisation dudit moyen de fixation comporte en outre un moyen d'anti rotation (40).

6. Gabarit de perçage selon la revendication 5, **caractérisé en ce que** ledit moyen d'anti rotation comporte une plaque (40) comprenant des moyens de maintien de la tête de la pièce de fixation.

7. Gabarit de perçage selon la revendication 6, **caractérisé en ce que** ladite plaque (40) comporte une ouverture en son centre, ladite ouverture et ledit canon (30) étant coaxiaux.

8. Gabarit de perçage selon l'une des revendications 2 à 7, **caractérisé en ce que** ladite bride (50) comporte deux ouvertures (51a, 51b) de forme sensiblement complémentaire à celle des tiges (21a, 21b) dudit gabarit (10).

9. Gabarit de perçage selon la revendication 8, **caractérisé en ce qu'**un premier moyen de serrage est associé à au moins l'une desdites ouvertures (51a, 51b), de façon à permettre la fixation de ladite bride (50) à distance ajustable d'une extrémité du gabarit.

10. Gabarit de perçage selon l'une des revendications précédentes, **caractérisé en ce que** ladite bride (50) comporte une seconde ouverture formant collier de serrage prévu pour recevoir le nez d'un outil de perçage (100) et un second moyen de serrage (54).

11. Système de perçage comportant :

    - un gabarit de perçage (10) selon l'une des revendications 6 à 10,
    - au moins un moyen de fixation (200) du type comportant un fût (202), une tête (201) à l'extrémité du fût, le fût comportant un canal axial,

    dans lequel le diamètre dudit canal est sensiblement égal au diamètre extérieur du canon (30), et une dimension de la tête (201) transversale à l'axe du fût est sensiblement égale à l'écartement des bords tombés (41a, 41b) du moyen d'anti rotation (40).

12. Système de perçage selon la revendication 11, **caractérisé en ce qu'il** comporte en outre un outil de perçage (100) et un foret (101), le diamètre de la tige du foret étant sensiblement égal au diamètre intérieur dudit canon (30).

13. Système de perçage selon la revendication 12, **caractérisé en ce que** le foret (101) est un foret à béton.

**14.** Procédé de perçage d'un support (1) et de pose simultanée d'un moyen de fixation (200) dans une couche de matériau isolant (2) surmontant ledit support, utilisant un système de perçage selon la revendication 12 ou 13, comportant les étapes suivantes :

- fixer l'outil de perçage (100) dans le collier de serrage de la bride (50) à l'aide du second moyen de serrage (54),
- fixer le foret (101) à l'outil de perçage,
- insérer les tiges (21a, 21b) du gabarit (10) dans les ouvertures (51a, 51b) de la bride, et insérer le foret dans le canon (30),
- insérer le moyen de fixation (200) sur le canon et sur le moyen d'anti rotation (40),
- ajuster la position de la bride sur le gabarit et actionner l'au moins un premier moyen de serrage,
- percer,
- retirer le gabarit et l'outil de perçage, le moyen de fixation restant en place dans le matériau isolant,
- introduire une vis (250) dans le fût du moyen de fixation,
- visser.

**15.** Procédé de perçage selon la revendication 14, **caractérisé en ce que** la position de la bride (50) sur le gabarit (10) est ajustée de façon que la distance entre le moyen d'anti rotation (40) et la pointe du foret (101) soit sensiblement égale à :

$$Pf = E + P + M,$$

dans lequel :

E est l'épaisseur du matériau isolant (2),
P est la profondeur d'ancrage de la vis (250),
M est une marge.

**16.** Procédé de perçage selon l'un des revendications 14 ou 15, **caractérisé en ce que** le foret (101) est un foret à béton et la vis (250) est une vis à béton.

**Patentansprüche**

**1.** Bohrschablone (10), die dazu ausgelegt ist, gleichzeitig das Bohren eines Trägers (1) und das Montieren eines Befestigungsmittels (200) auf einem auf dem Träger aufliegenden Isoliermaterial (2) zu erleichtern, wobei die Schablone folgendes umfasst:

- Führungsmittel (21 a, 21 b),

- an einem ersten Ende der Führungsmittel, ein Mittel zum festen Verbinden des Befestigungsmittels auf der Schablone,

**gekennzeichnet durch**:

eine Halterung (50), die zum Aufnehmen des Einspannkopfs eines Bohrwerkzeugs (100) und zum Entlanggleiten am Führungsmittel vorgesehen ist.

**2.** Bohrschablone nach Anspruch 1, **dadurch gekennzeichnet, dass** die Führungsmittel zwei im Wesentlichen parallele Stangen (21a, 21b) umfassen.

**3.** Bohrschablone nach einem der Ansprüche 1 oder 2, **dadurch gekennzeichnet, dass** das Mittel zum festen Verbinden des Befestigungsmittels eine mit einem elastischen Radialreibungsmittel versehene Hülse (30) umfasst.

**4.** Bohrschablone nach Anspruch 3, **dadurch gekennzeichnet, dass** die Innenfläche der Hülse (30) zwei Rillen (31a, 31b) umfasst, die vorgesehen sind, um den Durchgang der Schneidplatten eines Betonbohrers (101) zu ermöglichen.

**5.** Bohrschablone nach einem der Ansprüche 1 bis 4, **dadurch gekennzeichnet, dass** das Mittel zum festen Verbinden des Befestigungsmittels weiterhin ein Drehverhinderungsmittel (40) umfasst.

**6.** Bohrschablone nach Anspruch 5, **dadurch gekennzeichnet, dass** das Drehverhinderungsmittel eine Platte (40) umfasst, die Haltemittel für den Kopf des Befestigungselements umfasst.

**7.** Bohrschablone nach Anspruch 6, **dadurch gekennzeichnet, dass** die Platte (40) in ihrer Mitte eine Öffnung umfasst, wobei die Öffnung und die Hülse (30) koaxial sind.

**8.** Bohrschablone nach einem der Ansprüche 2 bis 7, **dadurch gekennzeichnet, dass** die Halterung (50) zwei Öffnungen (51a, 51b) von im Wesentlichen komplementärer Form zu derjenigen der Stangen (21, 21b) der Schablone (10) umfasst.

**9.** Bohrschablone nach Anspruch 8, **dadurch gekennzeichnet, dass** ein erstes Spannmittel mindestens einer der Öffnungen (51a, 51b) zugehörig ist, derart, dass die Feststellung der Halterung (50) in einem von einem Ende der Schablone verstellbaren Abstand ermöglicht wird.

**10.** Bohrschablone nach einem der vorhergehenden Ansprüche,

**dadurch gekennzeichnet, dass** die Halterung (50) eine zweite Öffnung, die einen Einspannring bildet, der vorgesehen ist, um den Einspannkopf eines Bohrwerkzeugs (100) aufzunehmen, und ein zweites Einspannmittel (54) umfasst.

11. Bohrsystem umfassend:

    - eine Bohrschablone nach einem der Ansprüche 6 bis 10,
    - mindestens ein Befestigungsmittel (200) des Typs, umfassend einen Schaft (202), einen Kopf (201) am Ende des Schafts, wobei der Schaft einen axialen Kanal umfasst, in dem der Durchmesser des Kanals im Wesentlichen gleich dem Außendurchmesser der Hülse (30) ist, und eine Dimension des Kopfes (201) quer zur Achse des Schafts im Wesentlichen gleich dem Abstand der Randkrempen (41a, 41b) des Drehverhinderungsmittels (40) ist.

12. Bohrsystem nach Anspruch 11,
    **dadurch gekennzeichnet, dass** es weiterhin ein Bohrwerkzeug (100) und einen Bohrer (101) umfasst, wobei der Durchmesser des Schafts des Bohrers im Wesentlichen gleich dem Innendurchmesser der Hülse (30) ist.

13. Bohrsystem nach Anspruch 12,
    **dadurch gekennzeichnet, dass** der Bohrer (101) ein Betonbohrer ist.

14. Verfahren zum Bohren eines Trägers (1) und zum gleichzeitigen Montieren eines Befestigungsmittels (200) in einer auf dem Träger aufliegenden Schicht von Isoliermaterial (2), das ein Bohrsystem nach Anspruch 12 oder 13 verwendet, umfassend die folgenden Schritte:

    - Befestigen des Bohrwerkzeugs (100) in dem Einspannring der Halterung (50) mit Hilfe des zweiten Spannmittels (54),
    - Befestigen des Bohrers (101) am Bohrwerkzeug,
    - Einführen der Schäfte (21a, 21b) der Schablone (10) in die Öffnungen (51a, 51b) der Halterung, und Einführen des Bohrers in die Hülse (30),
    - Schieben des Befestigungsmittels (200) auf die Hülse und an das Drehverhinderungsmittel (40),
    - Einstellen der Position der Halterung auf der Schablone und Betätigen des mindestens einen ersten Spannmittels,
    - Bohren,
    - Zurückziehen der Schablone und des Bohrwerkzeugs, wobei das Befestigungsmittel in dem Isoliermaterial an Ort und Stelle verbleibt,

    - Einbringen einer Schraube (250) in den Schaft des Befestigungsmittels,
    - Einschrauben.

15. Verfahren zum Bohren nach Anspruch 14,
    **dadurch gekennzeichnet, dass** die Position der Halterung (50) auf der Schablone (10) so eingestellt ist, dass der Abstand zwischen dem Drehverhinderungsmittel (40) und der Spitze des Bohrers (101) im Wesentlichen gleich Folgendem ist:

$$Pf = E + P + M,$$

    wobei

    E die Dicke des Isoliermaterials (2) ist,
    P die Verankerungstiefe der Schraube (250) ist,
    M ein Spielraum ist.

16. Verfahren zum Bohren nach einem der Ansprüche 14 oder 15,
    **dadurch gekennzeichnet, dass** der Bohrer (101) ein Betonbohrer ist und die Schraube (250) eine Betonschraube ist.

**Claims**

1. Drill template (10), provided to simultaneously facilitate the drilling of a support (1) and the installation of a fastening unit (200) on an insulating material (2) surmounting said support, said template comprising:

    - means of guiding (21a, 21b),
    - at a first end of said means for guiding, a means for attaching said fastening unit onto the template,

    **characterised by**:

    - a flange (50) provided to receive the nose of a drilling tool (100) and to slide along means for guiding.

2. Drill template according to claim 1,
    **characterised in that** said means for guiding comprise two substantially parallel rods (21a, 21b).

3. Drill template according to one of claims 1 or 2,
    **characterised in that** said means for attaching said fastening unit comprises a gun (30) provided with an elastic radial means of friction.

4. Drill template according to claim 3,
    **characterised in that** the inner surface of said gun (30) comprises two grooves (31a, 31b), provided to allow for the passage of the end plates for a concrete drill bit (101).

**5.** Drill template according to one of claims 1 to 4, **characterised in that** said means for attaching said fastening unit further comprises an anti-rotation unit (40).

**6.** Drill template according to claim 5, **characterised in that** said anti-rotation unit comprises a plate (40) comprising means for maintaining the head of the fastening part.

**7.** Drill template according to claim 6, **characterised in that** said plate (40) comprises an opening in its centre, said opening and said gun (30) being coaxial.

**8.** Drill template according to one of claims 2 to 7, **characterised in that** said flange (50) comprises two openings (51a, 51b) with a shape that is substantially complementary to that of the rods (21a, 21b) of said template (10).

**9.** Drill template according to claim 8, **characterised in that** a first means of clamping is associated with at least one of said openings (51a, 51b), in such a way as to permit the fastening of said flange (50) at an adjustable distance from an end of the template.

**10.** Drill template according to one of the preceding claims, **characterised in that** said flange (50) comprises a second opening forming a clamping ring provided to receive the nose of a drilling tool (100) and a second means for clamping (54).

**11.** Drill system comprising:

- a drill template (10) according to one of claims 6 to 10,
- at least one fastening unit (200) of the type comprising a barrel (202), a head (201) at the end of the barrel, with the barrel comprising an axial channel,

wherein the diameter of said channel is substantially equal to the outer diameter of the gun (30), and a dimension of the head (201) transversal to the axis of the barrel is substantially equal to the space between the bent edges (41a, 41b) of the anti-rotation unit (40).

**12.** Drill system according to claim 11, **characterised in that** it further comprises a drilling tool (100) and a drill bit (101), the diameter of the rod of the drill bit being substantially equal to the inner diameter of said gun (30).

**13.** Drill system according to claim 12, **characterised in that** the drill bit (101) is a concrete drill bit.

**14.** Method for drilling a support (1) and the simultaneous installation of a fastening unit (200) in a layer of insulating material (2) surmounting said support, using a system for drilling according to claim 12 or 13, comprising the following steps:

- fastening the drilling tool (100) into the clamping ring of the flange (50) using the second means of clamping (54),
- fastening the drill bit (101) to the drilling tool,
- inserting the rods (21a, 21b) of the template (10) into the openings (51a, 51b) of the flange, and inserting the drill bit into the gun (3 0),
- inserting the fastening unit (200) on the gun and on the anti-rotation unit (40),
- adjusting the position of the flange on the template and actuating the at least one first means of clamping,
- drilling,
- removing the template and the drilling tool, with the fastening unit remaining in place in the insulating material,
- introducing a screw (250) into the barrel of the fastening unit,
- screwing.

**15.** Method for drilling according to claim 14, **characterised in that** the position of the flange (50) on the template (10) is adjusted in such a way that the distance between the anti-rotation unit (40) and the tip of the drill bit (101) is substantially equal to:

$$Pf = E + P + M,$$

wherein:

E is the thickness of the insulating material (2),
P is the anchoring depth of the screw (250),
M is a margin.

**16.** Method for drilling according to one of claims 14 or 15, **characterised in that** the drill bit (101) is a concrete drill bit and the screw (250) is a concrete screw.

EP 2 684 629 B1

Fig. 1

Fig. 3

Fig. 2

**Fig. 5**

**Fig. 4**

Fig. 6

**EP 2 684 629 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2955631
- DE 10060484 A1